# EUROPEAN PATENT SPECIFICATION

(11) **EP 2 835 060 B1**
(45) Date of publication and mention of the grant of the patent: **09.10.2019**
(21) Application number: 14179641.7
(22) Date of filing: 04.08.2014
(51) Int. Cl.: A23L 13/40, A23L 13/70

(54) **Method for the preparation of oil-containing whole muscle meat-based products and reconstituted meat-based products**
Verfahren zur Herstellung von ölhaltigen ganzen muskelfleischbasierten Produkten und fleischbasierten Formprodukten
Procédé pour la préparation de produits à base de viande musculaire entière contenant de l'huile et produits à base de viande reconstituée

(30) Priority: 07.08.2013 GR 20130100467
(43) Date of publication of application: 11.02.2015
(73) Proprietor: Creta Farm Societe Anonyme Industrial and Commercial, trading as Creta Farm S.A., 74100 Rethymnon (GR)
(72) Inventor: Domazakis, Emmanouil, 74100 Rethymnon (GR)
(74) Representative: Lang, Johannes

(56) References cited:
- EP-A1- 0 671 127
- EP-A1- 0 842 612
- EP-A1- 1 552 755
- EP-A1- 2 163 163
- WO-A1-02/065860
- WO-A1-2005/094617
- WO-A1-2009/073397
- WO-A2-2011/084698
- DE-A1- 10 353 854
- GB-A- 2 059 247
- GR-B- 1 007 894
- US-A1- 2004 247 763

## Description

The present invention relates to a method of production of meat-based products from the group consisting of oil-containing whole muscle meat-products and reconstituted meat-based products, preferably selected from the group consisting of thermally processed whole muscle meat-based products and thermally processed reconstituted meat-based products.
The object of the present invention is to enable stability of oil incorporation in a meat- based system. The challenge has been the stable incorporation of oil in the maximum technologically feasible quantity in meat-based products made of intact muscular tissue pieces, which are characterised by a restricted capacity to retain the added oil. This phenomenon is particularly profound in the case of premium products, where limited or no emulsifiers or/and gelling agents or/and stabilisers should be used.
The use of oil for treating whole muscle items or meat cuts retaining the structure of fresh meat has been previously reported. The patent EP 1,699,303B1 provides a method for improving the tenderness of a meat product, comprising contacting the meat product with a marinade which contains a fat and a protein, wherein the fat may be a plant fat. Said contacting, comprises churning, mixing, injecting, tumbling or agitating said meat product with the marinade. Moreover, the patent US 5,158,794A provides a process for marinating or pickling a meat product by the use of a marinating or pickling medium, which in a preferred embodiment comprises a heat stable starch and oil. The meat product is treated by contacting it with the marinating or pickling medium by overnight maturation, vacuum tumbling or injection followed by tumbling. EP 0842612 A1 discloses a process for preparing meat containing meat trimmings therein, which comprises fermenting meat trimmings with a starter culture, freezing the fermented meat trimmings and incorporating a frozen suspension of the meat trimmings in a brine, marinate or pickle into chilled meat characterized in that fat is added to the meat trimmings.

US 2004/ 0247763 A1 teaches a method for preparing a fully cooked or oven roasted shelf stable meat product, comprising of the steps of first mixing a selected group of ingredients which may include flavorings, colors, preservatives, sweeteners, salt, cures, fillers, bulking agents, edible acids, antimicrobials, antioxidants, concentrated proteins, emulsifiers, fats and oils, and others into a brine solution; injecting the ingredients and/or tumbling the ingredients with the selected meat product to create a homogeneous mixture; and further processing.

WO 2005/094617 A1 (also as EP 1729599 B1) refers to a method for the production of meat products from entire muscular tissue with direct incorporation of olive oil and maximum possible substitution of animal fat, which is achieved by the addition of olive oil after the extraction of the salt soluble meat proteins. This method includes the following stages: (a) tumbling of meat injected with the appropriate brine in a tumbling machine, (b) admixture of the olive oil, (c) the tumbling continues until the complete incorporation of the olive oil, (d) stuffing in casings, heat treatment and packing of the products.

GR 1007894 B relates to oil-containing meat-based products, made of finely or/and coarsely comminuted meat or minced meat and a method for making the same.

DE 10353854 A1 relates to a kebab food preparation process, whereby the sliced meat is injected with brine and discharged into a cooling tumbler where there is additional admixture of brine.

WO 2009/073397 A1 describes improved meat products and methods of producing such meat products by increased incorporation of healthy fats containing beneficial acids such as stearidonic acid (SDA).

WO 2011/084698 A2 relates to compositions and methods for producing a meat composition with a quantity of long chain fatty acids.

EP 0671127 A1 teaches a method for preparing a chicken for cooking, said method comprising injecting the chickens, in a cooled state, with a mixture of water and an edible oil.

WO 02/065860 A1 refers to a method of production of olive oil-containing meat products, made by finely comminuted meat.

GB 2059247 A relates to a process for the curing of meat cuts, said process comprising adding to the brine used in the pickling process and/or to the brine used or present during the tumbling or massaging process a water-soluble meat protein extract.

EP 1552755 A1 relates to a process for improving the texture and juiciness of a meat product intended for cooking, among others of those intended for frying. In particular, the invention relates to a marinade, comprising a fat and a protein. Said marinade may comprise a fat- and protein-containing dairy product, such as cooking cream.

EP 2163163 A1 relates to an oil composition, comprising oil and broth, a method for its preparation, and its use for the preparation of oil containing meat-based products.

The present invention refers to a method for preparing oil-containing whole muscle meat-based products and reconstituted meat-based products as defined in claim 1, and oil-containing whole muscle meat-based products and reconstituted meat-based products as defined in claim 16.

The aim of the present invention was accomplished by the use of specific oil and brine addition protocols. The invention relates to a method for preparing oil-containing whole muscle meat-based products and reconstituted meat-based products, wherein the method comprises the steps of: i) injecting a quantity of brine (a) into piece(s) of meat and ii) tumbling the injected meat piece(s) together with oil and a quantity of brine (b), wherein the quantity of brine (b) and the oil are simultaneously added into the tumbler/massager. Thus, according to the herein disclosed method, the incorporation of brine is conducted via a two-stage addition protocol, which comprises an injection step and a brine tumbling step in the tumbler/massager. In the context of the present invention, the brine incorporated via the injection step is called brine (a). Further, according to the present invention, the brine incorporated via the tumbling step is called brine (b).
According to the present invention, the tumbling process is the physical treatment conventionally carried out in a tumbler/massager, preferably under vacuum conditions.
According to the herein disclosed method, the oil is added simultaneously with a quantity of brine (b) in the brine tumbling step.

Thus, according to the herein disclosed method, the incorporation of oil is conducted via a tumbling process. The above oil and brine addition protocol constitutes a novel approach for achieving maximum stability of oil incorporation, due to the creation of optimised conditions for oil incorporation onto the surface of the meat piece(s). The term "simultaneous/ly", as used in the present invention, means that oil is added at the same time as a quantity of brine (b) is added, or before the added brine (b) is fully incorporated onto the tumbled meat pieces; or brine (b) is added before the added oil is fully incorporated onto the tumbled meat pieces. According to a preferred embodiment, no animal fat is added simultaneously to the addition of oil and brine.
In the context of the present invention, the term "meat-based products", whenever used herein, comprise whole muscle meat-based products and reconstituted (i.e. formed) meat-based products. A reconstituted (formed) meat product may give the impression that it is made of a whole muscle(s), but actually consists of different pieces combined together to form a solid product. Thus, the meat raw material in the case of the reconstituted meat products comprises a number of smaller meat pieces, usually originating from larger meat pieces (e.g. whole muscle meat pieces) previously cut, sliced and/or tenderised. The meat raw material in the case of whole muscle meat-based products comprise whole muscle(s), i.e. whole muscle meat pieces. Preferably, the present invention does not relate to finely comminuted and/or minced meat - based products, such as sausages and burgers. Accordingly, the meat raw material to be injected according to the invention is preferably not minced or processed in e.g. a bowl chopper. The terms "whole muscle meat-based products" or "reconstituted meat-based products", whenever used herein, comprises any cooked whole muscle meat-based product or cooked reconstituted meat-based product, preferably selected from the group consisting of thermally processed deli meats and/or thermally processed pre-sliced meats (e.g. pork ham, roast beef, turkey fillet, chicken fillet and the like) and/or thermally processed (partially or totally) meat products [e.g. schnitzels, nuggets, gyros-type products (e.g. Greek gyros), kebab, souvlaki and the like].

The term "oil", whenever used herein, comprises any edible oil fit for human consumption. Preferably, from a dietary point of view, the oil used according to the invention, is an edible vegetable oil, and/or mixtures thereof. Edible oils that can be used according to the present invention, without being restricted thereto, include: olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof. Many other kinds of oils that are used for cooking can, however, also be used, such as almond oil and avocado oil. In yet a further aspect, fish oils, rich in unsaturated fatty acids, may also be used. The oils used according to the present invention are preferably liquid at a temperature in the range o-25°C and more preferably liquid at a temperature in the range 0-15°C, due to their high unsaturated fatty acid content. The oils used according to the invention are not subjected to any treatment for modifying the initial distribution of fatty acids or the degree of their saturation, by processes like interesterification or hydrogenation. From the vegetable oils mentioned above, olive oil, sunflower oil, corn oil, soybean oil, canola oil and mixtures thereof are especially preferred, with olive oil being the most preferred oil. Preferably, the vegetable oil used according to the present invention is a virgin olive oil, more preferably an extra virgin olive oil. Moreover, it is preferred that the vegetable oil used is an organic oil, i.e. oil produced according to organic farming standards, verified by accredited organisations. The amount of the oil to be used for the treatment of meat pieces depends on the kind of oil, as well as on the intended oil concentration in the end product. According to the present invention, the amount of oil in the product formulation ranges between 0.5 and 20 wt.%, preferably between 1 and 15 wt.% and more preferably between 2 and 10 wt.% Preferably, the oil is used in substitution of animal fat, which is conventionally added during the preparation of meat-based products, either directly or via the use of muscular meat tissues of high fat content.

The term "brine" comprises the typical components known in the art for the making of brines, suited for the preparation of cooked whole muscle-based products or cooked reconstituted meat-based products. It is also within the scope of the invention, that concentrates or powdered/pulverized formulations of brine are also included, but need to be in the form of a suitable liquid composition before being used. The brine contains at least water and salt (sodium chloride or mixtures of sodium chloride with substitutes thereof) and optionally further ingredients. Preferably, the brine contains ingredients from the group consisting of phosphates (e.g. diphosphates, triphosphates, polyphosphates, etc.), antioxidants, stabilizers, preservatives (e.g. nitrite salts), flavor enhancers, acidifiers, thickening agents (e.g. starches), coloring agents, emulsifying agents (e.g. milk proteins, plant proteins, plasma proteins, egg proteins, mono- and diglycerides of fatty acids etc), processing aids, sugars, seasonings, vegetables, spices and mixtures thereof.
In the context of the present invention, two types of brine are distinguished, i.e. brine (a) and brine (b). According to the present invention, brine (a) and (b) may contain any ingredient from the above-mentioned group. In a further aspect, brine (b) may contain, in addition, oil and/or meat broth. According to the present invention, brine (a) does not contain oil. According to a preferred embodiment, brine (a) does not contain meat broth. The total amount of brine (i.e. brine (a) and brine (b)) used in the making of the meat-based products, as defined above, ranges from 10 to 100% wt , preferably from 15 to 60% wt and more preferably from 20 to 40 %wt based on the initial meat raw material. The brine injecting step preferably takes place at a room temperature up to 15°C. The brine to be used preferably has a maximum temperature of 8°C. The lower limit of the temperature range is above the freezing point of the brine. The brine tumbling step, takes place in temperatures characterizing common tumbling procedures, as known in the art and preferably takes place at a temperature up to 10°C, in particular in a range of from 0 to 8°C and under vacuum conditions.
The term "meat", as used in the present invention, comprises any type of meat suitable for human consumption, for example beef, veal, lamb, pork, poultry (e.g. turkey, chicken), fish and/or mixtures thereof. In the context of the present invention, the meat pieces prior to injection have adequate size for injection.

According to a preferred embodiment of the invention, the method of the present invention is used for the production of cooked whole muscle meat-based products or cooked reconstituted meat-based products and comprises the steps of:
(i) injecting meat piece(s) with a quantity of brine (a) and placing the injected meat pieces into the tumbler;
(ii) adding in the tumbler and onto the injected meat pieces of step (i) a quantity of brine (b) and a quantity of oil in a simultaneous mode;
(iii) proceeding to a tumbling phase, until the complete incorporation of oil;
(iv) further processing the product of step (iii) to the final products.

According to the present invention, step (i) of the above-described method is conducted according to conventional procedures known in the art for injecting substances (e.g. brine) into pieces of meat. An exemplary method for the injection of the brine uses an appropriate injection apparatus, such as a Multi Needles Injector. The amount of brine (a) to be injected ranges between 55 wt% and 99.5 wt%, more preferably between 60 wt% and 99 wt% and even more preferably between 65 wt% and 98 wt% of the total amount of brine (brine (a) and brine (b)) to be added. A typical composition of brine (a) essentially comprises water and NaCl, but may also contain additional ingredients, such as phosphate(s) (diphosphates, triphosphates, and/or polyphosphates, etc.), antioxidants, stabilizers, preservatives (e.g. nitrite salts), flavor enhancers, acidifiers, thickening agents (e.g. starches), coloring agents, emulsifying agents (e.g. milk proteins, plant proteins, plasma proteins, egg proteins, mono- and diglycerides of fatty acids etc), processing aids, sugars, seasonings, vegetables, spices and mixtures thereof.
In step (ii) of the above-described method, a quantity of brine (b) is added onto the meat piece(s) in the tumbler simultaneously with a quantity of oil. The amount of brine (b) to be added in step (ii) is preferably between 45 wt% and 0.5 wt%, more preferably between 40 wt% and 1 wt% and even more preferably between 35% and 2 % of the total brine to be added. A typical composition of brine (b) essentially comprises water and NaCl, but may also contain additional ingredients, such as phosphate(s) (diphosphates, triphosphates, tripolyphosphates and/or polyphosphates, etc.), antioxidants, stabilizers, preservatives (e.g. nitrite salts), flavor enhancers, acidifiers, thickening agents (e.g. starches), coloring agents, emulsifying agents (e.g. milk proteins, plant proteins, plasma proteins, egg proteins, mono- and diglycerides of fatty acids etc), processing aids, sugars, seasonings, vegetables, spices and mixtures thereof. In addition, brine (b) may also contain oil and/or meat broth.
During step (iii) of the above-described method, the meat preparation of (ii) is subjected to a tumbling phase. Tumbling at step (iii) is carried out according to the conventional procedure, known in the art. Tumbling is carried out in a conventional tumbler or massager. The precise duration of step (iii) depends on the selected tumbling rate (rpm), the type of equipment (e.g. the use/non-use of a cooling jacket), the quantity of the meat pieces to be tumbled, the size of the meat pieces, the type of meat pieces etc. Tumbling completes when the desired technical effect is achieved (i.e. absence of free oil at the surface of the meat piece(s)).
Finally, step (iv) of the above-described method, is conducted according to conventional procedures known in the art for the preparation of cooked whole muscle-based products or cooked reconstituted meat-based products. For the preparation of cooked whole muscle-based products or cooked reconstituted meat-based products from the group consisting of cooked ham, turkey fillet, roast beef, roasted chicken and the like, the preferred procedures include stuffing into casings and heat treatment (e.g. equivalent to pasteurisation) with subsequent chilling and packaging. For the preparation of cooked whole muscle meat-based products or cooked reconstituted meat-based products from the group consisting of schnitzels, nuggets, gyros-type products (e.g. greek gyros), kebab, souvlaki and the like, preferred procedures include moulding/forming, breading and heat treatment (e.g. baking, grilling, deep-frying), with subsequent chilling and packaging.
The aforesaid steps (ii) and (iii) are preferably carried out at a temperature up to 15°C, in particular in a range of from 0 to 8°C.

In a preferred embodiment of the invention, the method of the present invention is likewise used for the production of cooked whole muscle meat-based products or cooked reconstituted meat-based products and comprises the steps of:
(i) injecting meat piece(s) with brine (a) and placing the injected meat piece(s) into the tumbler;
(ii) subjecting the brine-injected meat piece(s) into a first tumbling phase;
(iii) pausing the tumbling and adding a quantity of brine (b) simultaneously with a quantity of oil, into the tumbler and onto the meat pieces of step (ii);
(iv) proceeding to a second tumbling phase and continue tumbling to fully incorporate the added oil; and
(v) further processing the product of step (iv) to the final products.

According to the present invention, step (i) of the above-described method is conducted according to conventional procedures known in the art for injecting substances (e.g. brine) into pieces of meat. An exemplary method for the injection of the brine composition (a), uses an appropriate injection apparatus, such as a Multi Needles Injector. The amount of brine (a) to be injected ranges between 55 wt% and 99.5 wt%, more preferably between 60 wt% and 99 wt% and even more preferably between 65 wt% and 98 wt% of the total amount of brine to be added [i.e. brine (a) and brine (b)]. A typical composition of brine (a) essentially comprises water and NaCl, but may also contain additional ingredients, such as phosphate(s) (diphosphates, triphosphates, tripolyphosphates and/or polyphosphates, etc.), antioxidants, stabilizers, preservatives (e.g. nitrite salts), flavor enhancers, acidifiers, thickening agents (e.g. starches), coloring agents, emulsifying agents (e.g. milk proteins, plant proteins, plasma proteins, egg proteins, mono- and diglycerides of fatty acids etc), processing aids, sugars, seasonings, vegetables, spices and mixtures thereof.

During step (ii) of the above-described method, the brine-injected meat piece(s) are subjected to a first tumbling phase. Tumbling at step (ii) is carried out according to the conventional procedures, known in the art.

Tumbling is carried out in a conventional tumbler, under vacuum conditions. The precise duration of step (ii) depends on the selected tumbling rate (rpm), the type of equipment (e.g. the use/non-use of a cooling jacket), the quantity of the meat pieces to be tumbled, the size of the meat pieces, the type of meat pieces etc. An exemplary percentage of tumbling revolutions for the completion of step (ii), is preferably up to 50%, more preferably up to 25% and even more preferably up to 10% of the total number of tumbling revolutions suited for the making of the intended meat product, depending on the above-mentioned parameters. In step (iii), tumbling is paused, and a quantity of brine (b) is added onto the piece(s) of meat, together with the quantity of oil, into the tumbling vessel. The amount of brine (b) to be added in step (iii) is preferably between 45 wt% and 0.5 wt%, more preferably between 40 wt% and 1 wt% and even more preferably between 35% and 2 % of the total brine to be added. A typical composition of brine (b) essentially comprises water and NaCl, but may also contain additional ingredients, such as phosphate(s) (diphosphates, triphosphates and/or polyphosphates, etc.), antioxidants, stabilizers, preservatives (e.g. nitrite salts), flavor enhancers, acidifiers, thickening agents (e.g. starches), coloring agents, emulsifying agents (e.g. milk proteins, plant proteins, plasma proteins, egg proteins, mono- and diglycerides of fatty acids etc), processing aids, sugars, seasonings, vegetables, spices and mixtures thereof. In addition, brine (b) may also contain oil and/or meat broth.

In step (iv), the meat pieces of step (iii) are further processed during a second tumbling phase. The precise duration of step (iv) depends on the selected tumbling rate (rpm), the type of equipment (e.g. equipped with cooling jacket), the quantity of the meat pieces to be tumbled, the size of the meat pieces, the type of meat pieces etc. An exemplary percentage of tumbling revolutions for the completion of step (iv), is preferably up to 55%, more preferably up to 75% and even more preferably up to 90% of the total number of tumbling revolutions suited for the making of the intended meat product, depending on the above-mentioned parameters. Tumbling completes when the desired technical effect is achieved (i.e. absence of free oil at the surface of the meat piece(s)).

The aforesaid steps (ii) - (iv) are preferably carried out at a temperature up to 15°C, in particular in a range of from o to 8°C.

Finally, step (v) of the above-described method, is conducted according to conventional procedures known in the art for the preparation of cooked whole muscle-based products or cooked reconstituted meat-based products. For the preparation of cooked whole muscle-based products or cooked reconstituted meat-based products from the group consisting of cooked ham, turkey fillet, roast beef, roasted chicken and the like, the preferred procedures include stuffing into casings and heat treatment (e.g. equivalent to pasteurisation) with subsequent chilling and packaging. An exemplary oil containing cooked whole muscle meat-based product prepared according to the present invention is shown in Example 1.
For the preparation of cooked whole muscle-based products or cooked reconstituted meat-based products from the group consisting of schnitzels, nuggets, gyros-type products (e.g. greek gyros), kebab, souvlaki and the like, preferred procedures include moulding/forming, breading and heat treatment (e.g. baking, grilling, deep-frying), with subsequent chilling and packaging.

### EXAMPLES

### EXAMPLE 1: Preparation of cooked whole muscle meat-based products

In the following, an exemplary method for preparing cooked whole muscle meat-based product, such as pork ham is described.

A quantity of brine (in this exemplary preparation, brines (a) and (b) were identical) according to the present invention (see Table 1) was injected into intact pieces of muscular tissue, in particular topside, silverside and knuckle muscles of pork leg trimmed to membrane, suitable for the production of cooked ham (temperature: 0-4 °C and 5.7<pH< 6.3). Injection of the brine took place using an injection apparatus (Günther injector, model PI 21). The total brine intake level was calculated to be 20 %wt of the initial meat raw material and 15% was the actual brine intake for the brine injection step. The brine was at a temperature of 8 °C and the meat pieces were thawed (temperature 2°C), prior to injection. Subsequently, the injected meat pieces were subjected to the first phase of the tumbling treatment (Tumbler type Günther, model GPA 200 K) of the following parameters: vacuum 90%, rotation at 10RPM for 60 minutes,60% incline, temperature 0-4°C Following the completion of the first tumbling phase, the tumbling was paused and oil (extra virgin olive oil) equal with the 5% wt of the initial meat raw material, was added simultaneously with a quantity of brine (b) in the tumbler. The brine addition at the brine tumbling step was 5% wt, based on the initial meat raw material. The second tumbling phase was then commenced and continued for 10 hours at 8RPM with 10 minutes work and 20 minutes break, always under 90% vacuum. After the tumbling treatment was completed, the meat preparation was stuffed in appropriate casings and subjected to a thermal treatment according to common practices known in the art (indicative temperature for the product core was 71 °C). The final yield of the product was 118% which means that from 100 kg of meat plus 20 kg of brine and 5 kg of oil, 118 kg of cooked product has been produced.

**Table 1**

| **Brine (a) and (b)** | |
|---|---|
| Additives | % Brine |
| Phosphates | 2,4 |
| Sodium ascorbate | 0,3 |
| Dextrose | 6 |
| Spices | 1,2 |
| Carrageen | 1,2 |
| Curing Salt (Table salt and 0.6% sodium nitrite) | 10,8 |
| Water | 78,1 |
| Total | 100 |

## Claims

1. A method for preparing oil-containing whole muscle meat-based products or reconstituted meat-based products, wherein the method comprises the steps of:
i) injecting a quantity of brine (a) into meat piece(s) and
ii) tumbling the injected meat piece(s) together with oil and a quantity of brine (b), wherein the quantity of brine (b) and the oil are simultaneously added into a tumbler/massager;
wherein brine (a) does not contain oil.

2. The method of claim 1, wherein brine (a) and/or brine (b) comprise water, salt, and optionally one or more ingredients selected from phosphates, antioxidants, stabilizers, preservatives, flavor enhancers, acidifiers, thickening agents, coloring agents, emulsifying agents, processing aids, sugars, seasonings, vegetables, spices, and mixtures thereof.

3. The method of any of claims 1 to 2, wherein the meat piece(s) are selected from meat of beef, veal, lamb, pork, poultry, fish, and/or mixtures thereof.

4. The method of any of the preceding claims, wherein the quantity of brine (a) is in the range of from 55 wt% to 99.5 wt% and the quantity of brine (b) is in the range of from 45 wt% and 0.5 wt%, in each case based on the total amount of brine (a) and brine (b).

5. The method of any of the preceding claims, wherein brine (a) and brine (b) comprise the same ingredients.

6. The method of any of the preceding claims, wherein brine (a) and brine (b) do not comprise oil.

7. The method of any of the preceding claims, wherein brine (a) does not comprise meat broth.

8. The method of any of the preceding claims, wherein the total amount of brine in the meat-based products is in the range of from 10 to 100 wt% of the meat raw material.

9. The method of any of the preceding claims, wherein the amount of oil in the meat-based products is in the range of from 0.5 to 20 wt%.

10. The method of any of the preceding claims, wherein no emulsifier or gelling agent or stabilizer is used.

11. The method of any of the preceding claims, wherein after step (i) the injected meat piece(s) are tumbled before step (ii).

12. The method of any of claims 1 to 9, comprising the steps of:
(i) injecting meat piece(s) with a quantity of brine (a) and placing the injected meat piece(s) into a tumbler/massager;
(ii) adding into the tumbler/massager and onto the meat piece(s) of step (i) a quantity of brine (b) and a quantity of oil in a simultaneous mode;
(iii) proceeding to a tumbling phase, until the complete incorporation of oil, and
(iv) further processing the product of step (iii) to the final product.

13. The method of any of claims 1 to 9, comprising the steps of:
(i) injecting meat piece(s) with a quantity of brine (a) and placing the injected meat piece(s) into a tumbler/massager;
(ii) subjecting the injected meat piece(s) to a first tumbling phase;
(iii) pausing the tumbling and adding a quantity of brine (b) simultaneously with a quantity of oil into the tumbler/massager and onto the meat piece(s) of step (ii);
(iv) proceeding to a second tumbling phase, until the complete incorporation of oil, and
(v) further processing the product of step (iv) to the final product.

14. The method of claim 12 or 13, wherein the step of further processing comprise filling the resulting product in stuffing materials, subjecting the stuffed product to a heat treatment, and chilling the product.

15. The method of claim 12 or 13, wherein the step of further processing comprise moulding/forming, breading, subjecting to heat treatment, and chilling the product.

16. Oil-containing whole muscle meat-based products or reconstituted meat-based products obtainable by the method according to any of the preceding claims.

## Patentansprüche

1. Verfahren zur Herstellung von ölhaltigen Vollmuskelfleisch-basierten Produkten oder rekonstituierten fleischbasierten Produkten, wobei das Verfahren die Schritte umfasst:
i) Injizieren einer Menge an Sole (a) in ein Fleischstück oder Fleischstücke und
ii) Tumbeln bzw. Hin- und Herwälzen des injizierten Fleischstücks oder der injizierten Fleischstücke zusammen mit Öl und einer Menge an Sole (b), wobei die Menge an Sole (b) und das Öl gleichzeitig in einen Tumbler/eine Massagemaschine gegeben werden;
wobei Sole (a) nicht Öl enthält.

2. Verfahren nach Anspruch 1, wobei Sole (a) und/oder Sole (b) Wasser, Salz und gegebenenfalls einen oder mehrere Bestandteile umfassen, die aus Phosphaten, Antioxidationsmitteln, Stabilisatoren, Konservierungsmitteln, Geschmacksverstärkern, Säuerungsmitteln, Verdickungsmitteln, Färbemitteln, Emulgatoren, Verarbeitungshilfsmitteln, Zuckern, Gewürzen, Gemüse, Würzen und Gemischen davon, ausgewählt sind.

3. Verfahren nach irgendeinem der Ansprüche 1 bis 2, wobei das Fleischstück oder die Fleischstücke ausgewählt sind aus Fleisch von Rind, Kalb, Lamm, Schwein, Geflügel, Fisch und/oder Gemischen davon.

4. Verfahren nach irgendeinem der vorhergehenden Ansprüche, wobei die Menge an Sole (a) in dem Bereich von 55 Gew.-% bis 99,5 Gew.-% liegt und die Menge an Sole (b) in dem Bereich von 45 Gew.-% bis 0,5 Gew.-% liegt %, jeweils bezogen auf die Gesamtmenge an Sole (a) und Sole (b).

5. Verfahren nach irgendeinem der vorhergehenden Ansprüche, wobei Sole (a) und Sole (b) die gleichen Bestandteile umfassen.

6. Verfahren nach irgendeinem der vorhergehenden Ansprüche, wobei Sole (a) und Sole (b) nicht Öl umfassen.

7. Verfahren nach irgendeinem der vorhergehenden Ansprüche, wobei Sole (a) nicht Fleischbrühe umfasst.

8. Verfahren nach irgendeinem der vorhergehenden Ansprüche, wobei die Gesamtmenge an Sole in den fleischbasierten Produkten in dem Bereich von 10 bis 100 Gew.-% des Fleischrohmaterials liegt.

9. Verfahren nach irgendeinem der vorhergehenden Ansprüche, wobei die Menge an Öl in den fleischbasierten Produkten in dem Bereich von 0,5 bis 20 Gew.-% liegt.

10. Verfahren nach irgendeinem der vorhergehenden Ansprüche, wobei kein Emulgator oder Geliermittel oder Stabilisator verwendet wird.

11. Verfahren nach irgendeinem der vorhergehenden Ansprüche, wobei nach Schritt (i) das injizierte Fleischstück oder die injizierten Fleischstücke vor Schritt (ii) getumbelt bzw. hin- und hergewälzt werden.

12. Verfahren nach irgendeinem der Ansprüche 1 bis 9, umfassend die Schritte:
(i) Injizieren von einem Fleischstück oder Fleischstücken mit einer Menge an Sole (a) und Platzieren des injizierten Fleischstücks oder der injizierten Fleischstücke in einen Tumbler/eine Massagemaschine;
(ii) gleichzeitiges Hinzufügen einer Menge an Sole (b) und einer Menge an Öl in den Tumbler/die Massagemaschine und auf das Fleischstück oder die Fleischstücke von Schritt (i);
(iii) Weitergehen zu einer Tumbelphase bis zu der vollständigen Einarbeitung von Öl, und
(iv) Weiterverarbeitung des Produkts von Schritt (iii) zu dem Endprodukt.

13. Verfahren nach irgendeinem der Ansprüche 1 bis 9, umfassend die Schritte:
(i) Injizieren von einem Fleischstück oder Fleischstücken mit einer Menge an Sole (a) und Platzieren des injizierten Fleischstücks oder der injizierten Fleischstücke in einen Tumbler/eine Massagemaschine;
(ii) einer ersten Tumbelphase Unterziehen des injizierten Fleischstücks oder der injizierten Fleischstücke;
(iii) Unterbrechen des Tumbelns und Hinzufügen einer Menge an Sole (b) gleichzeitig mit einer Menge an Öl in den Tumbler/die Massagemaschine und auf das Fleischstück oder die Fleischstücke von Schritt (ii);
(iv) Weitergehen zu einer zweiten Tumbelphase bis zu der vollständigen Einarbeitung von Öl, und
(v)Weiterverarbeitung des Produkts von Schritt (iv) zu dem Endprodukt.

14. Verfahren nach Anspruch 12 oder 13, wobei der Schritt der Weiterverarbeitung ein Füllen des resultierenden Produkts in Füllmaterialien, ein einer Wärmebehandlung Unterziehen des gefüllten Produkts, und ein Abkühlen des Produkts umfasst.

15. Verfahren nach Anspruch 12 oder 13, wobei der Schritt der Weiterverarbeitung ein Formen/Bilden, ein Panieren, ein einer Wärmebehandlung Unterwerfen, und ein Abkühlen des Produkts umfasst.

16. Ölhaltige Vollmuskelfleisch-basierte Produkte oder rekonstituierte fleischbasierte Produkte, erhältlich durch das Verfahren gemäß irgendeinem der vorhergehenden Ansprüche.

## Revendications

1. Procédé de préparation de produits à base de viande de muscle entier contenant une huile, ou de produits à base de viande reconstitués, le procédé comprenant les étapes consistant à :
i) injecter une certaine quantité d'une saumure (a) dans une ou plusieurs pièces de viande, et
ii) à mariner la ou les pièces de viande injectée, en même temps qu'une huile et une certaine quantité de saumure (b), la certaine quantité d'une saumure (b) et l'huile étant simultanément introduites dans une marineuse/un malaxeur ;
la saumure (a) ne contenant pas d'huile.

2. Procédé selon la revendication 1, dans lequel la saumure (a) et/ou la saumure (b) comprennent de l'eau, du sel, et en option un ou plusieurs ingrédients choisis parmi les phosphates, les antioxydants, les stabilisants, les conservateurs, les exhausteurs de goût, les acidifiants, les épaississants, les agents colorants, les émulsifiants, les adjuvants de transformation, les sucres, les agents de sapidité, les légumes, les épices et les mélanges de ceux-ci.

3. Procédé selon l'une quelconque des revendications 1 ou 2, dans lequel la ou les pièces de viande sont choisies parmi la viande de boeuf, de veau, de mouton, de porc, de volaille, de poisson et/ou les mélanges de ceux-ci.

4. Procédé selon l'une quelconque des revendications précédentes, dans lequel la quantité de la saumure (a) est comprise dans la plage de 55 % en poids à 99,5 % en poids et la quantité de la saumure (b) est comprise dans la plage de 45 % en poids à 0,5 % en poids, dans chaque cas par rapport à la quantité totale de la saumure (a) et de la saumure (b).

5. Procédé selon l'une quelconque des revendications précédentes, dans lequel la saumure (a) et la saumure (b) comprennent les mêmes ingrédients.

6. Procédé selon l'une quelconque des revendications précédentes, dans lequel la saumure (a) et la saumure (b) ne comprennent pas d'huile.

7. Procédé selon l'une quelconque des revendications précédentes, dans lequel la saumure (a) ne comprend pas de bouillon de viande.

8. Procédé selon l'une quelconque des revendications précédentes, dans lequel la quantité totale de saumure dans les produits à base de viande est comprise dans la plage de 10 à 100 % en poids par rapport à la matière première viande.

9. Procédé selon l'une quelconque des revendications précédentes, dans lequel la quantité d'huile dans les produits à base de viande est comprise dans la plage de 0,5 à 20 % en poids.

10. Procédé selon l'une quelconque des revendications précédentes, dans lequel aucun émulsion ni agent gélifiant ni stabilisant n'est utilisé.

11. Procédé selon l'une quelconque des revendications précédentes, dans lequel, après l'étape (i), la ou les pièces de viande injectée sont marinées avant l'étape (ii) .

12. Procédé selon l'une quelconque des revendications 1 à 9, comprenant les étapes consistant à :
(i) injecter dans une ou plusieurs pièces de viande une certaine quantité d'une saumure (a), et à placer la ou les pièces de viande injectée dans une marineuse/un malaxeur ;
(ii) introduire dans la marineuse/le malaxeur, et sur la ou les pièces de viande de l'étape (i), une certaine quantité de la saumure (b) et une certaine quantité d'huile, en mode simultané ;
(iii) passer à une phase de marinage, jusqu'à incorporation complète de l'huile, et
(iv) soumettre à une transformation plus poussée le produit de l'étape (iii) pour obtenir le produit final.

13. Procédé selon l'une quelconque des revendications 1 à 9, comprenant les étapes consistant à :
(i) injecter dans une ou plusieurs pièces de viande une certaine quantité d'une saumure (a), et à placer la ou les pièces de viande subi une injection dans une marineuse/un malaxeur ;
(ii) soumettre la ou les pièces de viande injectée à une première phase de marinage ;
(iii) interrompre le marinage et à introduire une certaine quantité d'une saumure (b), en même temps qu'une certaine quantité d'huile, dans la marineuse/le malaxeur et sur la ou les pièces de viande de l'étape (ii) ;
(iv) procéder à une deuxième phase de marinage, jusqu'à incorporation complète de l'huile, et
(v) soumettre à une transformation plus poussée le produit de l'étape (iv) jusqu'à obtenir le produit final.

14. Procédé selon la revendication 12 ou 13, dans lequel l'étape de transformation plus poussée comprend le poussage du produit obtenu dans des matériaux à farcir, la soumission du produit poussé à un traitement thermique, et le refroidissement du produit.

15. Procédé selon la revendication 12 ou 13, dans lequel l'étape de transformation plus poussée comprend le moulage/formage, la panure, la soumission à un traitement thermique et le refroidissement du produit.

16. Produits à base de viande de muscle entier contenant de l'huile, ou produits à base de viande reconstitués, pouvant être obtenus par le procédé selon l'une quelconque des revendications précédentes.
